# EUROPEAN PATENT APPLICATION

(11) **EP 2 006 496 A1**
(43) Date of publication of application: **24.12.2008**
(21) Application number: 07012311.2
(22) Date of filing: 22.06.2007
(51) Int. Cl.: F01D 19/02, F02C 7/26, F01D 25/10, F02C 9/28

(54) **Gas turbine engine start up method**

(71) Applicant: SIEMENS AKTIENGESELLSCHAFT, 80333 München (DE)
(72) Inventor: Gudmundsson, Bengt, 60560 Svärtinge (SE); Ignell, Lars-Erik, 61243 Finspång (SE); Näs, Lennart, 60210 Norrköping (SE); Svensson, Jan-Eric, 61245 Finspång (SE)

(57) **Abstract**

The invention relates to a method to start up a gas turbine engine (GT), which gas turbine engine comprises a combustor (CC) and a rotor (GR). The rotor rotates during normal operation at a speed (n) basically close to nominal speed (nom). Ordinary start up methods under cold ambient conditions provide a preheating of the intake air by means of an electric preheater. This additional equipment is expensive and subject to fail. It is proposed that during a warm-up-phase (D) the combustion of the gas turbine engine (GT) is active and the gas turbine engine (GT) is operated at a reduced rotational speed (n) , which is lower than the nominal speed (n), as long as the temperature of a reference part (REF) does not exceed a first temperature limit (TL) and when the first temperature limit (TL) is exceeded the warm up phase (D) ends and the turbine is accelerated up to nominal speed (n).

## Description

The present invention relates to a method to start up a gas turbine, which comprises of a combustor and a rotor. The rotor rotates during normal operation at a speed basically close to nominal speed.

Starting up a modern turbo machine like a gas turbine or a steam turbine is always a highly critical and complex procedure since only slight deviations from the prescribed start up sequence can lead to serious damage of the machine. This becomes especially true for unit with high efficiencies. The importance to utilize energy sources in the most efficient way, leads to a gas turbine design, which is capable to operated under extremely high temperatures and which provides only very little radial and axial clearances between the rotor and the stationary parts of the machine to minimize leakage flows, which diminish the power output. The extreme conditions, to which turbine parts are exposed, namely high temperature and high dynamic forces, narrow the choice of potential materials for the turbine parts. Since many of the critical parts of the machine are operated extremely close to the limit of mechanical and thermal load capacity, deviations from calculated operating conditions are not tolerable. While the design of a gas turbine for a steady state operation under nominal power output is already complicated, it is even more critical to design the machine for transient conditions during the start up and the shut down procedures. During transient operation, especially during a cold start the rotor and the stationary parts of the gas turbine warms up non-uniformly the differences in thermal expansion must be taken into consideration. To avoid excessive big clearances between the rotor and the stationary parts, which would reduce the efficiency of the machines significantly, the start up procedure underlies certain constraints to keep the difference in thermal expansion below certain limits.

The occurrence of vibrations of the rotor and rotating elements under certain operating conditions, especially resonance frequencies of several parts of the gas turbine must also be taken into consideration. Moreover, material properties of these highly specialized parts do depend on their temperature and change significantly especially during transient conditions.

Owing to the fact that gas turbines of modern design don't tolerate wide changes in operating conditions the operation under extreme ambient temperatures becomes a problem especially during the start up of these machines. In areas, where ambient temperatures of below minus 15 degrees Celsius are likely to occur a safe start up of gas turbines of modern design can often not be guaranteed due to insufficient material properties of some parts. In a cold environment especially the brittleness of some highly specialized parts can become a problem.

It was proposed previously to preheat the machine or at least the air sucked in by the gas turbine. However, such a preheat module must be designed sufficiently big to cope with the enormous amount of air a modern gas turbine of normal size inhales. Moreover this additional module generates excessive costs and diminishes the efficiency of the gas turbine during normal operation since an additional pressure loss is caused by this module in the air intake channel. Furthermore, due to the increase of number of parts, which do always have a certain risk of failure, safe operation and availability of a gas turbine is endangered.

Based on this problem it is one object of the invention to provide a method to start up a gas turbine, which is located in an area, where ambient temperatures of below minus 15°C are likely to occur avoiding the application of a preheat unit for intake air or the gas turbine itself.

According to one aspect of the invention the problem is solved by a method to start up a gas turbine, which gas turbine comprises a combustor and a rotor, which rotor rotates during normal operation at an essentially constant nominal speed, comprising the steps:
1. during a warm-up-phase the combustor of the gas turbine is active and the gas turbine is operated at a reduced rotational speed, which is lower than the nominal speed (n), as long as the temperature of a reference part does not exceed a first temperature limit and
2. when the temperature of the reference part reaches the first temperature limit the warm up phase ends and the turbine is accelerated up to nominal speed.

In correspondence with the common technical definition, the nominal speed is the speed at which the maximum power output of the gas turbine can be obtained. The combustor is deemed to be active, when it is fired with fuel respectively fuel is supplied and ignition has taken place.

One advantage of the new start up procedure is the avoidance of additional hardware modules to be arranged in the area of the intake of the gas turbine. With only a slight delay respectively increase of the duration of the new warm up phase the gas turbine can be put into service under nominal rotational speed without additional pressure loss due to any preheating module. The gas turbine does not have to be modified to be operated under arctic climate conditions, which gives the customer a higher flexibility. By the avoidance of an additional preheating module also a higher availability can be maintained. Significant costs are saved by the new start up method.

An even higher degree of safety is obtained when the reduced rotational speed is chosen lower than a rotors resonance speed, preferably lower than the lowest resonance speed of the rotor. Therefore higher vibration amplitudes are not induced on some cold and therefore brittle components.

The start of a gas turbine is supported by a starter motor in order to ensure an air flow through the turbine to enable proper ignition and combustion. At a certain rotor speed the gas turbine has reach a sustainable state which allow load by increased firing and disconnection of the starter motor. Since a gas turbine is not designed to run at a speed which is significantly lower than the nominal speed, the rotation at reduced speed is supported by a gas turbine starter motor. This operation mode can involve the starter motor at different power levels. For a gas turbine, ,which normally rotates at a speed of approximately 100% of nominal rotor design speed the rotor revolutions per minute during the warm up phase according to the invention can be between 20% and 50% of nominal rotor design speed depending on the speed of the first resonance of the rotor.

It is necessary according to the inventor to monitor the temperature of at least one part of the gas turbine to ensure that the temperature has exceeded the ductile to brittle transition temperature. This part is preferably a critical part with respect to the operating conditions during start up in a cold environment.

Experiments and investigations revealed that one optimal position for such a temperature measurement can be located at an inner casing of a compressor of the gas turbine and/or a bearing support for a bearing of a rotor of a compressor of the gas turbine or in the gas turbine downstream the compressor. If downstream the compressor bearing a support for a rotor bearing is provided, which is commonly called strut, this component is an ideal position for a temperature measurement respectively thermocouple. In an optimized start up procedure according to the invention the duration of the warm up phase depends on the temperature of the critical component monitored. The warm up phase ends, when the measured temperature exceeds a first temperature limit, which is above a critical temperature. A critical temperature can be - 15°C but preferably is chosen higher than 0 °C to guarantee operational safety. For gas turbines, which are not very frequently started but operated over a longer durations it is cheaper but sufficient to extend the warm up phase over a longer period of time which duration is proved by calculation to be long enough to guarantee adequate temperatures for all critical parts. This duration can be between 5 and 20 minutes after ignition of the gas turbine. The way of providing the heating up of the critical parts is to raise the pressure ratio of the compressor by igniting the combustor and though increased volume flow in the turbine raise the compressor back pressure. Higher back pressure leads to higher temperature for the air flowing around critical parts.

The above mentioned attributes and other features and advantageous of this invention and the manner of attaining them, will become more apparent and the invention itself will be better understood by reference to the following description of an embodiment of the invention, which is currently the best mode known to the inventor, taken in conjunction with the accompanying drawings wherein
- Figure 1: shows a schematic diagram of the gas turbine speed over time during a conventional start up sequence,
- Figure 2: shows a schematic diagram of gas turbine speed over time during a start up procedure according to the invention and
- Figure 3: shows a longitudinal sectional view through a gas turbine with the preferred position for a thermocouple to monitor the temperature of a critical part.
- Figure 3a: temperature of a reference part.

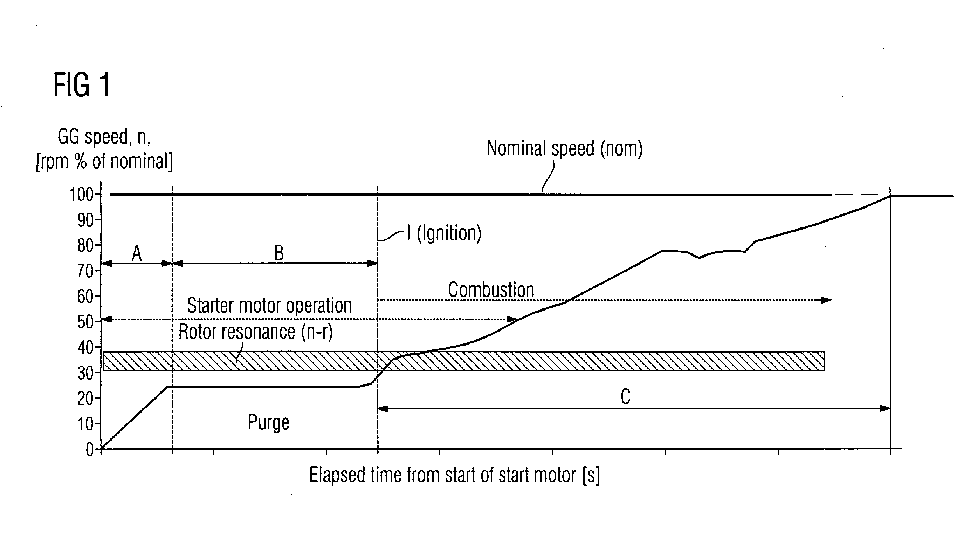

Figure 1 shows a diagram displaying the gas turbine's speed over time during a conventional start up sequence. In a first phase A a starter of the gas turbine GT accelerates the rotor up to a suitable speed for purging. When purging (phase B) is finished after approximately 2 minutes the ignition (I) of the fuel supplied to the combustor takes place at approximately 25% of nominal rotor speed and an acceleration phase C begins. During the acceleration phase C the gas turbine GT rotor passes rotational speeds, in which resonance frequencies n-r of the rotor are located so that the components of the gas turbine GT are subjected to higher amplitudes of vibration. During this critical phase the risk of rubbing between the rotor and the stationary parts is the highest and the dynamic load on the components can be close to the material property limits. Finally the rotor rotates at nominal speed nom. In case of very low ambient temperature this start up procedure will not work since it is not allowed to pass the resonance speed without having reached a temperature level above the ductile to brittle temperature of the critical parts.

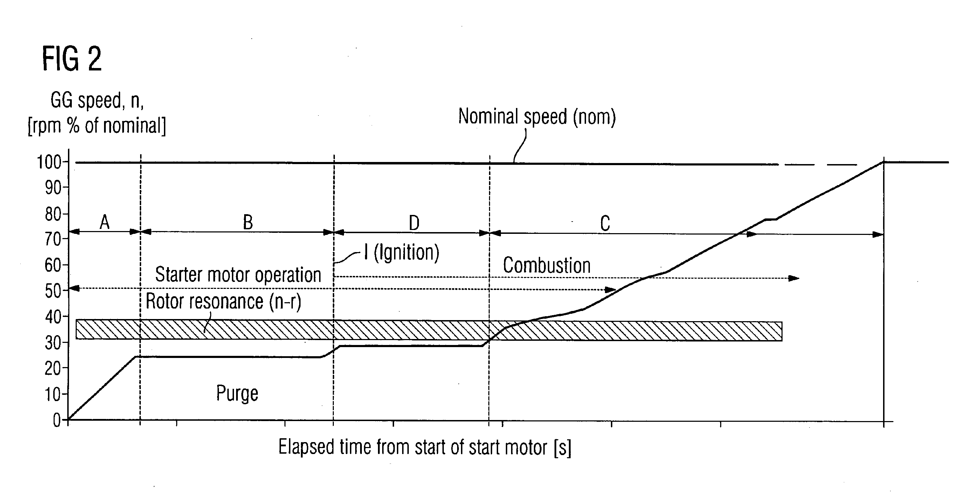

Figure 2 shows the new start up method for a very low ambient temperature in a comparable diagram. After ignition I and start of combustion the gas turbine GT warm up phase D according to the invention is displayed with the following acceleration phase C. The rotor speed during the warm up phase D is chosen below the resonance frequencies n-r of the rotor to avoid the most critical load on the gas turbine parts. The mass flow through the gas turbine and the combustor being active causes a sufficient heat generation to warm up all critical turbine parts, which reach temperatures above specific critical temperatures for these parts. The acceleration phase C is started after the warm up phase D as soon as the last critical component has reached a sufficient a temperature level. The constant speed during the warm up phase D is driven on the one hand by the combustion respectively the gas expansion in the gas turbine and on the other hand by a gas turbine starter motor running at approximately 50% load.

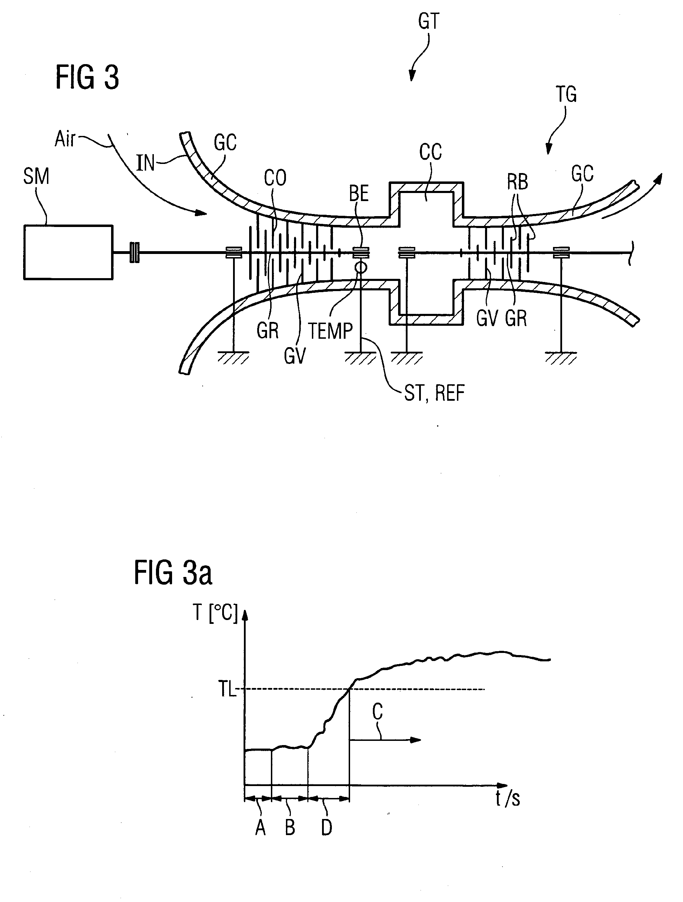

Figure 3 shows a longitudinal sectional view of a gas turbine depicting in general a gas turbine starter motor SM, driving a gas turbine rotor GR equipped with rotor blades RB and arranged in a gas turbine casing GC which is provided with guide vanes GV. The casing GC has a conical inlet IN for the intake of air AIR into a compressor CO of the gas turbine GT. The inhaled air reaches downstream a combustion chamber CC and afterwards the turbine TG of the gas turbine GT.

At the rear end (in flow direction) of the compressor CO a bearing BE is located supporting the rotor GR. The bearing BE itself is supported by radial struts ST, which are exposed to the compressed air. The temperature of these struts is the most critical one in the whole gas turbine when the ambient temperature is very low because this part is heavily loaded when the rotor passes the resonance range and at the same time exposed to the cold air flow during purge and start up prior to a sufficient pressure ratio is created in the rear end of the compressor. Therefore, the strut ST was identified as a reference part REF and as the ideal position for a thermocouple TEMP to monitor the temperature of the most critical part in the gas turbine GT. It was observed that the other parts of the gas turbine GT reach earlier a sufficient high temperature than the chosen strut ST respectively reference part. In a different design the reference part REF might be any other part, which remains critical for the longest time compared to the other parts.
Figure 3a shows the temperature of the references part REF, which increases steadily. During the warm up phase D a steep incline of the temperature transient is established. As soon as the temperature reaches a temperature limit TL the speed of the rotor is increased up to nominal speed.

## Claims

1. A Method to start up a gas turbine (GT), wherein the gas turbine comprises a combustor (CC) and a rotor (R), wherein the rotor (R) rotates during normal operation at a speed basically close to the nominal speed (n), comprising the steps:
1. during a warm-up-phase (D) the combustor (cc) of the gas turbine (GT) is active and the gas turbine (GT) is operated at a reduced rotational speed (n), which is lower than the nominal speed (n), as long as the temperature of a reference part (REF) does not exceed a first temperature limit (TL) and
2. when the temperature of the reference part reaches the first temperature limit (TL) the warm up phase (D) ends and the turbine is accelerated up to nominal speed (n).

2. Method according to claim 1,
**characterized in**
**that** the reduced rotational speed (n) is lower than a rotor's resonance speed (n-r).

3. Method according claim 2,
**characterized in**
**that** the reduced rotational speed (n) during the warm up phase (D) is lower than the lowest resonance frequency (n-r) of the rotor (GR).

4. Method according to one of the claims 1 to 3,
**characterized in**
**that** the rotation during the warm up phase (D) is at least partly driven by a gas turbine's (GT) starter motor (SM).

5. Method according to one of the claims 1 to 4,
**characterized in**
**that** the rotation during the warm up phase (D) is partly created by combustion in the gas turbine (GT) which establish a higher compressor (CO) back pressure and air temperature, which heats up the critical parts.

6. Method according to claim 1,
**characterized in**
**that** the warm up phase (D) ends and the gas turbine (GT) is accelerated to a higher speed (n), after a first time period of predefined duration (TWP) of the warm up phase (D).

7. Method according to claim 4,
**characterized in**
**that** the starter motor (SM) is operated at partial load during the warm up phase (D).

8. Method according to one of the claims 1 to 7,
**characterized in**
**that** the reference part (REF), of which the temperature is monitored is an inner casing (GC) of a compressor (CO) of the gas turbine (GT) and/or a bearing support for a bearing (BE) of a rotor of the compressor (CO) of the gas turbine (GT).
